# FASCICULE DE BREVET EUROPEEN

(11) **EP 3 651 976 B1**
(45) Date de publication et mention de la délivrance du brevet: **01.06.2022**
(21) Numéro de dépôt: 18752550.6
(22) Date de dépôt: 02.07.2018
(51) Int. Cl.: B29D 30/06, B29D 30/36, B29D 30/66, B29C 45/14, B29K 21/00, B29L 30/00

(54) **PROCÉDÉ DE FABRICATION À PLAT D'UN BANDAGE PNEUMATIQUE**
VERFAHREN ZUR FLÄCHIGEN HERSTELLUNG EINES LUFTREIFENS
METHOD FOR THE FLAT MANUFACTURING OF A PNEUMATIC TYRE

(30) Priorité: 11.07.2017 FR 1756544
(43) Date de publication de la demande: 20.05.2020
(73) Titulaire: Compagnie Générale des Etablissements Michelin, 63000 Clermont-Ferrand (FR)
(72) Inventeur: PIALOT, Frédéric, 63040 Clermont-Ferrand Cedex 9 (FR); FABRE, Thomas, 63040 Clermont-Ferrand Cedex 9 (FR); VERONNET, Jean-Luc, 63040 Clermont-Ferrand Cedex 9 (FR)
(74) Mandataire: Redouté, Gilles Pierre
(86) Numéro de dépôt international: PCT/FR2018/051636
(87) Numéro de publication internationale: WO 2019/012203

(56) Documents cités:
- EP-A1- 2 554 362
- EP-A1- 2 965 923
- DE-A1- 2 658 374
- DE-A1- 4 002 610
- DE-C2- 2 658 374
- FR-A1- 2 391 063
- JP-A- H0 616 008
- US-A1- 2010 181 003

## Description

### DOMAINE TECHNIQUE DE L'INVENTION

La présente invention se rapporte à un procédé de fabrication d'un bandage pneumatique et plus particulièrement un tel bandage ne comportant pas de matériau caoutchoutique à base d'élastomère diénique.

### ARRIÈRE-PLAN TECHNIQUE DE L'INVENTION

Les bandages pneumatiques sont habituellement formés de parties en matériaux caoutchoutiques comme des élastomères diéniques qui sont assemblées. Les bandages pneumatiques crus sont généralement fabriqués à partir de tambours en suivant des étapes connues de confection à plat sur un premier tambour de conformation puis sur un deuxième tambour de finition. Une étape finale de cuisson permet à la matière crue plastique de devenir élastique notamment par vulcanisation. Un tel procédé de fabrication dure traditionnellement environ vingt minutes pour un bandage pneumatique tourisme.

En effet, le temps de cuisson est directement influencé par la masse du bandage pneumatique et donc du type de bandage pneumatique. Ainsi, pour un bandage pneumatique tourisme d'une dizaine de kilogrammes, le temps de cuisson est de l'ordre de dix minutes alors que pour des bandages pneumatiques poids lourds ou pour le génie civil pesant de plusieurs dizaines de kilogrammes jusqu'à plusieurs tonnes, le temps de cuisson varie de quarante minutes à plusieurs jours.

Pour des raisons écologique et qualitative, ces matériaux caoutchoutiques ont toujours besoin d'être optimisés afin de diminuer leur résistance au roulement et d'améliorer leurs performances (tenue chimique, tenue mécanique, etc.) tout en améliorant leur recyclabilité.

Les documents EP 2 554 362 et EP 2 965 923 divulguent des exemples de demiébauches de structures de bandages pneumatiques formés à base d'élastomère thermoplastique et, le document US 2010/181003, un exemple de fabrication d'une gomme intérieure à base d'élastomère thermoplastique.

### RÉSUMÉ DE L'INVENTION

L'invention a pour but de fournir un nouveau procédé de fabrication d'un nouveau type de bandage pneumatique permettant de modifier significativement le coût de mise en œuvre du procédé, les performances du bandage pneumatique ainsi que sa recyclabilité.

À cet effet, l'invention se rapporte à un procédé de fabrication d'un bandage pneumatique **caractérisé en ce qu**'il comporte les étapes suivantes :
a) former une carcasse à partir d'au moins un premier matériau à base d'élastomère thermoplastique et deux tringles, cette étape comportant une phase a2) où l'on confectionne à plat la carcasse à partir d'au moins le premier matériau d'élastomère thermoplastique et les tringles, et une phase où l'on conforme la carcasse en rapprochant les tringles, cette conformation étant réalisée à chaud afin de relaxer les contraintes de la carcasse lors de sa conformation ;
b) surmouler sur la carcasse au moins un deuxième matériau à base d'élastomère thermoplastique.

Avantageusement selon l'invention, le procédé met en oeuvre de nouveaux types de matériaux à base d'un (ou plusieurs) élastomère(s) thermoplastique(s) (appelés parfois TPE provenant des termes anglais « thermoplastic elastomer »). On comprend donc que ces matériaux utilisés dans la fabrication du bandage pneumatique remplacent les matériaux caoutchoutiques traditionnels. Selon l'invention, le remplacement concerne, de manière avantageuse, la totalité du bandage pneumatique.

L'utilisation de ces matériaux à base d'élastomère thermoplastique permet en effet de modifier significativement les coûts de réalisation du bandage pneumatique ainsi que les performances finales. À titre d'exemple, la résistance au roulement, la tenue aux agressions extérieures (griffure, ozone, oxydation, etc.) peuvent être notablement améliorées par rapport aux matériaux caoutchoutiques. Enfin, ils sont recyclables.

Avantageusement selon l'invention, par la conformation à chaud, les extrusions, soudures, empilage et retournement de la nappe carcasse peuvent être réalisés selon des procédés similaires à ceux connus exception faite du remplacement des matériaux caoutchoutiques et du butyle de la gomme imperméable par un (ou plusieurs) matériau(x) à base d'élastomère thermoplastique tout en évitant le retour élastique des matériaux à base d'élastomère thermoplastique. On obtient ainsi une carcasse annulaire de section Ω « oméga » avec notamment des pieds sommet et des zones basses destinées à s'assembler avec une roue de montage habituelle.

Selon d'autres caractéristiques optionnelles de réalisation de l'invention :
- l'étape a) comporte les phases a1): fabriquer le premier matériau à base d'élastomère thermoplastique, une nappe carcasse, deux tringles, une gomme intérieure imperméable à l'air et des nappes sommet de travail, a2) : confectionner à plat la carcasse à partir du premier matériau d'élastomère thermoplastique, de la nappe carcasse, des deux tringles, de la gomme intérieure imperméable à l'air et des nappes sommet de travail, et a3) : conformer la carcasse en rapprochant les tringles, cette conformation étant réalisée à chaud afin de relaxer les contraintes de la carcasse lors de sa conformation ;
- l'étape b) comporte les phases b1) : ajuster la carcasse dans un moule, b2) : injecter le deuxième matériau à base d'élastomère thermoplastique sur la carcasse afin de former des flancs extérieurs et une bande de roulement, b3) : refroidir, dans le moule, l'ensemble obtenu lors de l'étape b2), et b4) : libérer le bandage pneumatique ainsi formé du moule ;
- lors de la phase b2), un deuxième matériau à base d'élastomère thermoplastique est injecté pour former les flancs extérieurs et un troisième matériau à base d'élastomère thermoplastique est injecté pour former la bande de roulement, les deuxième et troisième matériaux à base d'élastomère thermoplastique étant différents ;
- lors de l'étape b), le moule est maintenu à une température inférieure à 35 degrés Celsius ;
- la phase b3) permet la rigidification d'au moins la surface externe du matériau à base d'élastomère thermoplastique utilisé, en le refroidissant en-dessous d'une température déterminée fonction du matériau à base d'élastomère thermoplastique ;
- la température déterminée est la température de transition vitreuse ou la température de fusion du matériau à base d'élastomère thermoplastique utilisé.

De plus, l'invention se rapporte à un tambour de conformation comportant deux chariots déplaçables l'un par rapport à l'autre, chaque chariot comprenant des moyens de liaison par pivotement à deux tringles d'une carcasse d'un bandage pneumatique, caractérisé en ce qu'il comporte des éléments chauffants pour la mise en oeuvre de la phase a3) du procédé tel que présenté plus haut.

Selon d'autres caractéristiques optionnelles de réalisation de l'invention :
- le tambour comprend un anneau agencé pour exercer, à l'aide de sa surface externe, une contrainte contre la surface interne de la carcasse pour lui donner sa géométrie de conformation, les éléments chauffants comportant au moins une source de rayonnements électromagnétiques agencée pour chauffer la carcasse par sa surface externe ;
- les éléments chauffants comportent un anneau chauffant agencé pour exercer, à l'aide de sa surface externe, une contrainte contre la surface interne de la carcasse pour la chauffer et lui donner sa géométrie de conformation ;
- les éléments chauffants comportent deux moules chauffants agencés pour, après leur assemblage, recevoir contre leur surface interne, par une mise en pression de la surface interne de la carcasse, la surface externe de la carcasse pour la chauffer et lui donner sa géométrie de conformation.

### BRÈVE DESCRIPTION DES DESSINS

D'autres particularités et avantages ressortiront clairement de la description qui en est faite ci-après, à titre indicatif et nullement limitatif, en référence aux dessins annexés, dans lesquels :
- La figure 1 est une vue en coupe partielle d'un bandage pneumatique obtenu selon un procédé de l'invention ;
- La figure 2 est une vue en coupe partielle d'un tambour de confection sans membrane selon l'invention, utilisé pour la mise en oeuvre d'un premier mode de réalisation du procédé selon l'invention ;
- La figure 3 est une vue en perspective d'éléments chauffants du tambour de confection sans membrane utilisés pour la mise en oeuvre du premier mode de réalisation du procédé selon l'invention ;
- La figure 4 est une vue en coupe partielle d'un tambour de confection sans membrane selon l'invention, utilisé pour la mise en oeuvre d'un deuxième mode de réalisation du procédé selon l'invention ;
- La figure 5 est une vue en perspective d'un anneau du tambour de confection sans membrane utilisé pour la mise en oeuvre du deuxième mode de réalisation du procédé selon l'invention ;
- La figure 6 est une vue en coupe partielle d'un moule pour la mise en oeuvre des premier et deuxième modes de réalisation du procédé selon l'invention ;
- La figure 7 est une vue en coupe partielle du moule pour la mise en oeuvre des premier et deuxième modes de réalisation du procédé selon l'invention après la mise en place de la carcasse ;
- La figure 8 est une vue en coupe partielle du moule pour la mise en oeuvre des premier et deuxième modes de réalisation du procédé selon l'invention après l'injection de flancs extérieurs et d'une bande de roulement.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

Par « matériau caoutchoutique », on entend un matériau thermodurcissable tel un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement », on entend une quantité de matériau délimitée par des surfaces latérales et par deux surfaces principales dont l'une, appelée surface de roulement, est destinée à entrer en contact avec une chaussée lorsque le pneumatique roule.

Par « carcasse », on entend toute partie n'appartenant pas aux flancs extérieurs ou à la bande de roulement.

Par « matériau à base d'élastomère thermoplastique », on entend un matériau comportant tout ou partie de copolymères à blocs, constitués de blocs rigides, thermoplastiques, reliés par des blocs souples, élastomères. De tels matériaux présentent un comportement mécanique à la fois d'un élastomère et d'un polymère thermoplastique.

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semicristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température déterminée pour la mise oeuvre.

Les blocs élastomères peuvent être tous les élastomères connus de l'homme de l'art.

À titre d'exemple nullement limitatif de matériau à base d'élastomère thermoplastique, on peut citer par exemple des matériaux comportant au moins en partie des blocs du type SIS, SBS, SEBS ou SIBS (cf. référence AM3400 V1, « Élastomères thermoplastiques (TPE) », Michel Biron, Techniques de l'ingénieur, 10 juillet 2000).

L'invention s'applique à tout type de bandage pneumatique, notamment celles destinées à équiper des véhicules à moteur de type tourisme, SUV (« Sport Utility Vehicles »), deux roues (notamment motos), avions, véhicules industriels choisis parmi camionnettes, "Poids-lourds" - c'est-à-dire métro, bus, engins de transport routier (camions, tracteurs, remorques), véhicules hors-la-route tels qu'engins agricoles ou de génie civil -, ou autres véhicules de transport ou de manutention.

L'invention se rapporte à un procédé de fabrication d'un bandage pneumatique 1 comportant une carcasse 3 à partir d'au moins un premier matériau à base d'élastomère thermoplastique et des flancs extérieurs 5 et une bande de roulement 7 en au moins un deuxième matériau à base d'élastomère thermoplastique.

Selon un premier mode de réalisation, le procédé comporte une première étape a) destinée à former une carcasse 3 à partir d'au moins un premier matériau à base d'élastomère thermoplastique. En effet, contrairement au procédé habituel dans lequel il est utilisé des matériaux caoutchoutiques vulcanisables, dans le procédé selon l'invention, tout le bandage pneumatique 1 est destiné à être fabriqué à partir d'élastomère thermoplastique. Toutefois, la carcasse 3 peut être obtenue selon des étapes similaires aux étapes habituelles.

À titre nullement limitatif, l'étape a) peut ainsi comporter une première phase a1) destinée à fabriquer des matériaux à base d'élastomère thermoplastique notamment pour former une gomme intérieure 6 imperméable à l'air, une nappe carcasse 2, deux tringles 4 et des nappes sommet de travail 8. Les tringles 4 sont préférentiellement métalliques et les nappes sommet de travail 8 peuvent être formées d'un composite à base de verre et/ou d'un composite à base de fibres de carbone et/ou d'un tissu tramé et/ou d'un métal suivant le type de bandage pneumatique.

L'étape a) comporte ensuite une deuxième phase a2) destinée à confectionner à plat la carcasse 3 sur un premier tambour (non représenté) à partir des matériaux à base d'élastomère thermoplastique, de la nappe carcasse 2, des deux tringles 4, de la gomme intérieure 6 imperméable à l'air et des nappes sommet de travail 8 réalisés lors de la phase a1). À ce titre, on comprend que les extrusions, soudures, empilage et retournement de la nappe carcasse 2 peuvent être réalisés selon des procédés similaires à ceux connus exception faite du remplacement des matériaux caoutchoutiques et du butyle de la gomme imperméable par un (ou plusieurs) matériau(x) à base d'élastomère thermoplastique.

Ensuite, selon l'invention, le procédé se poursuit avec une troisième phase a3) destinée à conformer à chaud la carcasse 3 sur un deuxième tambour 13 afin que les tringles 4 soient en face l'une de l'autre.

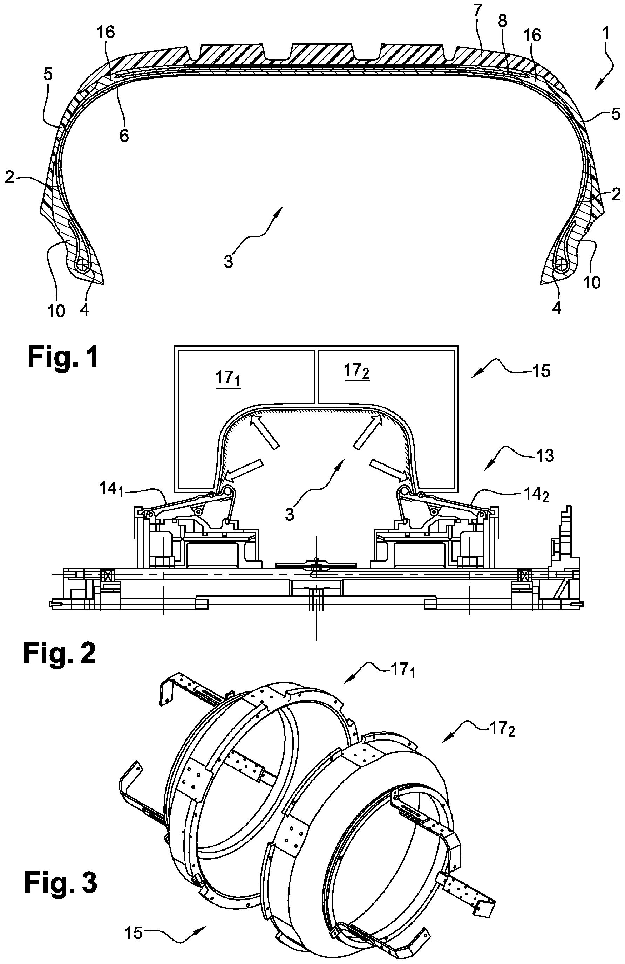

Comme visible dans l'exemple de la figure 2, la phase a3) est réalisée à l'aide d'un deuxième tambour 13 qui est relié par pivotement aux deux tringles 4 de manière habituelle. Le deuxième tambour 13 est ainsi préférentiellement du type TVSM (venant des termes « tambour variable sans membrane »). Avantageusement selon le premier mode de réalisation de l'invention, le deuxième tambour 13 permet de rapprocher les deux tringles 4 l'une de l'autre et est muni d'éléments chauffants 15 afin de relaxer les contraintes de la carcasse 3 lors de sa conformation.

Plus précisément, il a été trouvé que la conformation d'une carcasse 3 confectionné à plat à partir de matériaux à base d'élastomère thermoplastique devait être préférentiellement réalisée à une température de mise en oeuvre au-dessus de la température de transition vitreuse (ou de fusion le cas échéant) du bloc thermoplastique desdits matériaux à base d'élastomère thermoplastique afin d'éviter qu'ils ne reprennent leur géométrie de confection à plat. Par la conformation à chaud, on évite donc le retour élastique des matériaux à base d'élastomère thermoplastique.

Avantageusement selon le premier mode de réalisation l'invention, les éléments chauffants 15 comportent deux moules chauffants 17₁, 17₂ agencés pour, après leur assemblage, chauffer la carcasse 3 lors de la phase a3) de conformation. Plus précisément, les surfaces internes des moules chauffants 17₁, 17₂ une fois assemblées enferment la surface externe de la carcasse 3 et permettent également de recevoir, par une surpression contre la surface interne de la carcasse 3, la surface externe de la carcasse 3 pour lui donner sa géométrie de conformation.

À titre nullement limitatif, la phase a3) pourrait ainsi comporter le montage d'un des moules 17₁, 17₂ sur le deuxième tambour 13 puis la mise en place de la carcasse 3 sur le deuxième tambour 13 du type TVSM selon le montage classique d'une carcasse diénique avec la différence d'avoir à contrer la déformation élastique induite par les matériaux à base d'élastomère thermoplastique. Une fois la carcasse 3 reliée à liaison pivot sur les chariot 14₁, 14₂, l'autre moule 17₂, 17₁ peut être mis en place.

Le chauffage des moules 17₁, 17₂ peut alors commencer pour obtenir par exemple une température comprise entre 90 et 130 degrés Celsius suivant les matériaux utilisés. Cette chauffe peut être intégrée en avance pour ne pas pénaliser le temps de cycle. Une fois la température de consigne atteinte, le rapprochement des chariots 14₁, 14₂ peut être effectué pour rapprocher les tringles 4 et donc également les moules 17₁, 17₂.

La phase a3) peut comporter, une fois les moules 17₁, 17₂ solidarisés l'un contre l'autre, un gonflage de la carcasse 3 pour plaquer sa surface externe contre la surface interne des moules 17₁, 17₂ comme, par exemple, avec une pression comprise entre 0,2 à 0,35 bar. Un maintien du chauffage peut être effectué entre 5 à 15 minutes suivant les géométries et l'épaisseur des matériaux puis est arrêté en maintenant le gonflage pour laisser refroidir la carcasse 3 conformée. Une fois refroidie, la carcasse 3 peut être retirée des moules 17₁, 17₂ et du deuxième tambour 13 ce qui termine la phase a3).

On obtient ainsi une carcasse 3 annulaire de section en forme de U (parfois appelée section Ω « oméga ») avec notamment des pieds sommet 16 et des zones basses 10 destinées à s'assembler avec une roue de montage habituelle, parfois appelée jante (non représentée).

Selon l'invention, le procédé se poursuit avec la deuxième étape b) destinée à surmouler, sur la carcasse 3 obtenue lors de l'étape a), au moins un deuxième matériau à base d'élastomère thermoplastique afin de terminer le bandage pneumatique 1 comme illustré à la figure 1. Préférentiellement, l'étape b) peut être obtenue par coulage ou par injection dans un moule 9.

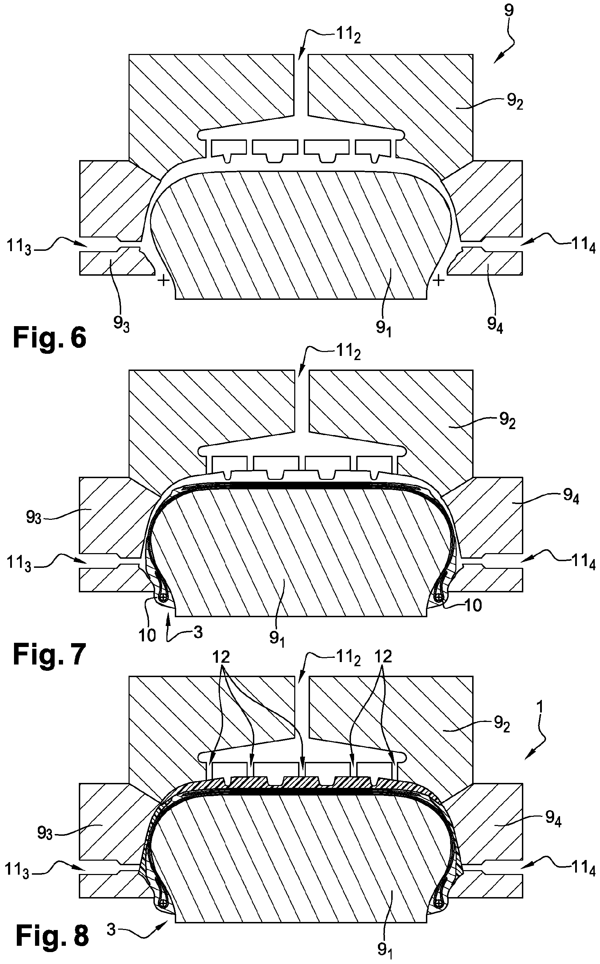

À titre nullement limitatif, un exemple de moule 9 selon l'invention est représenté à la figure 6. Il comporte un noyau 9₁ destiné à maintenir la forme interne du futur bandage pneumatique 1, un sommet 9₂ et deux flancs 9₃, 9₄. Comme visible à la figure 6, le sommet 9₂ et les deux flancs 9₃, 9₄ du moule 9 comportent chacun une conduite 11₂, 11₃, 11₄ pour alimenter le moule 9 en matériau à base d'élastomère thermoplastique. Préférentiellement, lors de l'étape b), le moule 9 est maintenu à une température inférieure à 35 degrés Celsius et, de manière encore plus préférée, autour de 20 degrés Celsius.

Comme illustré dans un exemple de l'invention aux figures 7 et 8, la deuxième étape b) peut ainsi comporter une première phase b1) destinée à ajuster la carcasse 3 dans le moule 9. Plus précisément, la surface interne de la carcasse 3 est ajustée sur la surface externe du noyau 9₁ et plaquée au niveau de ses zones basses 10 par les flancs 9₃, 9₄ du moule 9 comme illustré à la figure 7. On remarque que l'interstice, laissé entre la carcasse 3 et les sommet 9₂ et deux flancs 9₃, 9₄, forme alors l'espace de surmoulage souhaité.

À titre nullement limitatif, la deuxième étape b) peut comporter ensuite une deuxième phase b2) destinée à injecter le deuxième matériau à base d'élastomère thermoplastique sur la carcasse 3 afin de former des flancs extérieurs 5 et une bande de roulement 7 du bandage pneumatique 1.

Le matériau peut ainsi être injecté dans une ou plusieurs des conduites 11₂, 11₃, 11₄ du moule 9 pour remplir l'interstice formé entre la carcasse 3 et respectivement le sommet 9₂ et les deux flancs 9₃, 9₄. L'injection (ou les injections) est préférentiellement réalisée à une température de mise en oeuvre supérieure à la température de transition vitreuse (ou de fusion le cas échéant) du bloc thermoplastique du matériau injecté, comme, par exemple, supérieure à 200°C et est très rapide comme, par exemple, un temps inférieur à 10 secondes.

Préférentiellement, le (ou les) matériau(x) injecté(s) et plus généralement le bandage pneumatique obtenu, est maintenu dans le moule 9 dans une phase b3) afin de le refroidir en-dessous de la température de transition vitreuse (ou de fusion le cas échéant) du bloc thermoplastique du matériau à base d'élastomère thermoplastique pendant un temps inférieur à 60 secondes grâce à l'échange thermique avec le moule 9 maintenu à une température inférieure à 35 degrés Celsius comme expliqué ci-dessus.

Ainsi, il est souhaité de garantir le refroidissement d'au moins de la surface externe du (ou des) matériau(x) injecté(s), c'est-à-dire la surface en contact avec le moule 9, afin d'être suffisamment rigide pour ne pas coller au moule 9 et, par conséquent, faciliter sa libération. Bien entendu, suivant le type de bandage pneumatique (notamment son épaisseur) et la géométrie du moule 9, il peut également être souhaité que le refroidissement soit plus ou moins profond afin que la matière au centre des flancs extérieurs 5 et de la bande de roulement 7 ne se déforme pas lors de la future libération du moule 9.

À titre d'exemple, l'étape d'injection peut ainsi durer environ deux secondes et l'étape de refroidissement entre vingt et quarante secondes pour la formation des flancs extérieurs 5 et de la bande de roulement 7 d'un bandage pneumatique tourisme.

La liaison entre les premier et deuxième matériaux à base d'élastomère thermoplastique est favorisée par les pressions atteintes lors de l'injection préférentiellement supérieure à 1000 bars et la bonne mouillabilité du deuxième matériau à base d'élastomère thermoplastique qui, grâce à la température d'injection, se trouve dans sa phase liquide. Enfin l'étape b) se termine par la phase b4) destinée à libérer le bandage pneumatique 1 ainsi formé du moule 9.

Dans une variante préférée illustrée aux figures 1 et 8, lors de la phase b2), un deuxième matériau à base d'élastomère thermoplastique est injecté pour former les flancs extérieurs 5 et un troisième matériau à base d'élastomère thermoplastique est injecté pour former la bande de roulement 7 afin d'optimiser leurs fonctions respectives, c'est-à-dire que les deuxième et troisième matériaux à base d'élastomère thermoplastique sont différents et dédiés à leurs fonctions. Plus précisément, le deuxième matériau doit afficher une esthétique avantageuse pour recevoir les marquages réglementaires et être très résistant aux agressions mécaniques et chimiques (griffure, ozone, oxydation, etc.) tandis que le troisième matériau doit être optimisé pour son contact avec le sol notamment quant à son adhérence sur sols sec et humide, son usure et son énergie (bruit et consommation).

Préférentiellement, les deuxième et troisième matériaux sont injectés de sorte à ce que les fronts de matière se rejoignent entre les zones basses 10 et les pieds sommet 16 de la carcasse 3 comme mieux illustré à la figure 1. À la figure 8, on peut voir que le deuxième matériau est ainsi injecté par les conduites 11₃, 11₄ du moule 9 alors que le troisième matériau est injecté par la conduite 11₂ du moule 9 qui se ramifie pour remplir l'interstice formé entre la carcasse 3 et le sommet 9₂ du moule 9 selon plusieurs ouvertures 12 débouchant en faisant face à la carcasse 3.

Avantageusement selon l'invention, le procédé permet d'obtenir de nouveaux types de bandage pneumatique 1 comportant plusieurs matériaux à base d'un (ou plusieurs) élastomère(s) thermoplastique(s). On comprend donc que les matériaux utilisés dans la fabrication du bandage pneumatique 1 remplacent les matériaux caoutchoutiques traditionnels en apportant des nouveaux avantages.

L'utilisation de ces matériaux à base d'élastomère thermoplastique permet en effet de modifier significativement les coûts de réalisation du bandage pneumatique ainsi que les performances finales. À titre d'exemple, le temps de fabrication de la bande de roulement 7 est drastiquement diminué et la fabrication peut être réalisée en automatique. De plus, la résistance au roulement, la tenue aux agressions extérieures (griffure, ozone, oxydation, etc.) peuvent être notablement améliorée par rapport aux matériaux caoutchoutiques. Enfin, ils sont recyclables.

Selon un deuxième mode de réalisation, le procédé comporte une première étape a) destinée à former une carcasse 3 à partir d'au moins un premier matériau à base d'élastomère thermoplastique avec les mêmes effets techniques et avantages que le premier mode de réalisation. Seule la phase a3) du deuxième mode de réalisation diffère de celle du premier mode de réalisation.

Ainsi, selon le deuxième mode de réalisation, l'étape a) comporte une troisième phase a3) destinée à conformer à chaud la carcasse 3 sur un deuxième tambour 13 afin que les tringles 4 soient en face l'une de l'autre. Ainsi, la phase a3) est réalisée à l'aide d'un deuxième tambour 13, similaire au premier mode de réalisation, qui est relié par pivotement aux deux tringles 4 de manière habituelle. Toutefois, le deuxième tambour 13 dans le deuxième mode de réalisation est ainsi préférentiellement du type TCSM (venant des termes « tambour coquille sans membrane »).

Avantageusement selon l'invention, le deuxième tambour 13 permet de rapprocher les deux tringles 4 l'une de l'autre grâce aux chariots 14₁, 14₂ comme pour le premier mode de réalisation. Toutefois, la conformation ne se fait plus par un moulage de surface externe de la carcasse 3 mais par un anneau 18 déployable agencé entre les chariots 14₁, 14₂ pour exercer, à l'aide de sa surface externe, une contrainte contre la surface interne de la carcasse 3 pour lui donner sa géométrie de conformation. De plus, les éléments chauffants 15 afin de relaxer les contraintes de la carcasse 3 lors de sa conformation diffèrent dans le deuxième mode de réalisation mais gardent les mêmes effets techniques et avantages du premier mode de réalisation.

Avantageusement selon une première variante du deuxième mode de réalisation l'invention, les éléments chauffants 15 comportent au moins une source 19 de rayonnements électromagnétiques, comme une source de rayonnements infrarouges, agencée pour chauffer la carcasse 3 par sa surface externe lors de la phase a3) de conformation. À titre nullement limitatif, la phase a3) pourrait ainsi comporter la mise en place de la carcasse 3 sur le deuxième tambour 13 du type TCSM selon le montage classique d'une carcasse diénique avec la différence d'avoir à contrer la déformation élastique induite par les matériaux à base d'élastomère thermoplastique. Une fois la carcasse 3 reliée à liaison pivot sur les chariot 14₁, 14₂, l'anneau 18 peut être partiellement déployé afin de tendre à froid les matériaux de la carcasse 3.

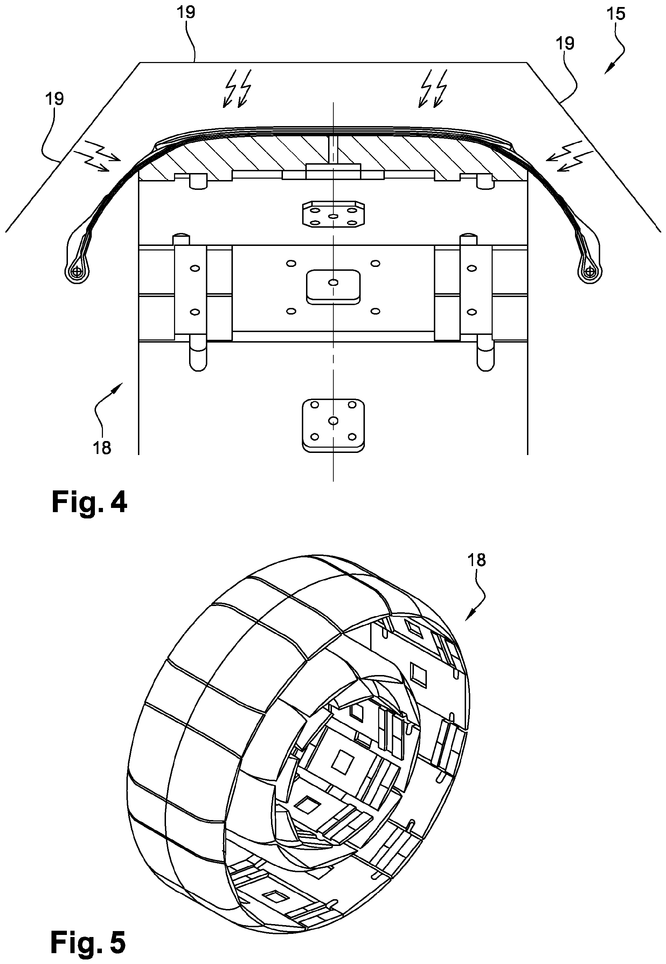

Le chauffage par chaque source 19 de rayonnements électromagnétiques utilisée peut alors commencer (trois sources 19 à la figure 4) pour obtenir par exemple une température comprise entre 90 et 130 degrés Celsius suivant les matériaux utilisés. Une fois la température de consigne atteinte, un gonflage de la carcasse 3 comme, par exemple, avec une pression comprise entre 0,2 à 0,35 bar et un déploiement maximal de l'anneau 18 est opéré. Les positions sont maintenues pendant une durée comprise entre 5 à 15 minutes suivant les géométries et l'épaisseur des matériaux. Le chauffage est arrêté et le rapprochement des chariots 14₁, 14₂ est effectué pour rapprocher les tringles 4 et ainsi laisser refroidir la carcasse 3 conformée. Une fois refroidie, la carcasse 3 peut être retirée du deuxième tambour 13 ce qui termine la phase a3).

Avantageusement selon une deuxième variante du deuxième mode de réalisation l'invention, les éléments chauffants 15 sont formés sur l'anneau 18 lui-même qui est agencé pour chauffer la carcasse 3 au niveau de sa surface interne lors de la phase a3) de conformation. À titre nullement limitatif, la phase a3) pourrait ainsi comporter la mise en place de la carcasse 3 sur le deuxième tambour 13 du type TCSM selon le montage classique d'une carcasse diénique avec la différence d'avoir à contrer la déformation élastique induite par les matériaux à base d'élastomère thermoplastique. Une fois la carcasse 3 reliée à liaison pivot sur les chariot 14₁, 14₂, l'anneau 18 peut être partiellement déployé afin de tendre à froid les matériaux de la carcasse 3.

Le chauffage par l'anneau 18 peut alors commencer pour obtenir par exemple une température comprise entre 90 et 130 degrés Celsius suivant les matériaux utilisés. Une fois la température de consigne atteinte, un gonflage de la carcasse 3 comme, par exemple, avec une pression comprise entre 0,2 à 0,35 bar et un déploiement maximal de l'anneau 18 est opéré. Les positions sont maintenues pendant une durée comprise entre 5 à 15 minutes suivant les géométries et l'épaisseur des matériaux. Le chauffage de l'anneau 18 est arrêté et le rapprochement des chariots 14₁, 14₂ est effectué pour rapprocher les tringles 4 et ainsi laisser refroidir la carcasse 3 conformée. Une fois refroidie, la carcasse 3 peut être retirée du deuxième tambour 13 ce qui termine la phase a3).

Les première et deuxième variantes du deuxième mode de réalisation permettent donc d'obtenir ainsi une carcasse 3 annulaire de section en forme de U (parfois appelée section Ω « oméga ») avec notamment avec des pieds sommet 16 et des zones basses 10 destinées à s'assembler avec une roue de montage habituelle, parfois appelée jante (non représentée).

Z Selon le deuxième mode de réalisation l'invention, le procédé se poursuit avec la deuxième étape b) destinée à surmouler, sur la carcasse 3 obtenue lors de l'étape a), au moins un deuxième matériau à base d'élastomère thermoplastique selon les mêmes effets techniques et avantages que l'étape b) du premier mode de réalisation ou de sa variante expliqués ci-dessus.

Le procédé selon le deuxième mode de réalisation de l'invention permet, de manière avantageuse, d'obtenir de nouveaux types de bandage pneumatique 1 comportant plusieurs matériaux à base d'un (ou plusieurs) élastomère(s) thermoplastique(s). On comprend donc que les matériaux utilisés dans la fabrication du bandage pneumatique 1 remplacent les matériaux caoutchoutiques traditionnels en apportant des nouveaux avantages.

L'utilisation de ces matériaux à base d'élastomère thermoplastique permet en effet de modifier significativement les coûts de réalisation du bandage pneumatique ainsi que les performances finales. À titre d'exemple, le temps de fabrication de la bande de roulement 7 est drastiquement diminué et la fabrication peut être réalisée en automatique. De plus, la résistance au roulement, la tenue aux agressions extérieures (griffure, ozone, oxydation, etc.) peuvent être notablement améliorée par rapport aux matériaux caoutchoutiques. Enfin, ils sont recyclables.

L'invention n'est pas limitée aux modes de réalisation et variantes présentés et d'autres modes de réalisation et variantes apparaîtront clairement à l'homme du métier, à condition que ceux-ci soient selon les revendications.

II est notamment possible d'envisager d'autres éléments de chauffage 15 sans perdre les avantages de l'invention

## Revendications

1. Procédé de fabrication d'un bandage pneumatique (1) comportant les étapes suivantes :
a) former une carcasse (3) à partir d'au moins un premier matériau à base d'élastomère thermoplastique et deux tringles (4), cette étape comportant une phase a2) où l'on confectionne à plat la carcasse (3) à partir d'au moins le premier matériau d'élastomère thermoplastique et les tringles (4), et une phase a3) où l'on conforme la carcasse (3) en rapprochant les tringles (4), cette conformation étant réalisée à chaud afin de relaxer les contraintes de la carcasse (3) lors de sa conformation ;
b) surmouler sur la carcasse (3) au moins un deuxième matériau à base d'élastomère thermoplastique.

2. Procédé selon la revendication précédente, dans lequel l'étape a) comporte les phases suivantes :
a1) fabriquer le premier matériau à base d'élastomère thermoplastique, une nappe carcasse (2), deux tringles (4), une gomme intérieure (6) imperméable à l'air et des nappes sommet de travail (8) ;
a2) confectionner à plat la carcasse (3) à partir du premier matériau d'élastomère thermoplastique, de la nappe carcasse (2), des deux tringles (4), de la gomme intérieure (6) imperméable à l'air et des nappes sommet de travail (8) ;
a3) conformer la carcasse (3) en rapprochant les tringles (4), cette conformation étant réalisée à chaud afin de relaxer les contraintes de la carcasse (3) lors de sa conformation.

3. Procédé selon la revendication 1 ou 2, dans lequel l'étape b) comporte les phases suivantes :
b1) ajuster la carcasse (3) dans un moule (9) ;
b2) injecter le deuxième matériau à base d'élastomère thermoplastique sur la carcasse (3) afin de former des flancs extérieurs (5) et une bande de roulement (7) ;
b3) refroidir, dans le moule (9), l'ensemble obtenu lors de l'étape b2) ;
b4) libérer le bandage pneumatique (1) ainsi formé du moule (9).

4. Procédé selon la revendication précédente, dans lequel, lors de la phase b2), un deuxième matériau à base d'élastomère thermoplastique est injecté pour former les flancs extérieurs (5) et un troisième matériau à base d'élastomère thermoplastique est injecté pour former la bande de roulement (7), les deuxième et troisième matériaux à base d'élastomère thermoplastique étant différents.

5. Procédé selon la revendication 3 ou 4, dans lequel, lors de l'étape b), le moule (9) est maintenu à une température inférieure à 35 degrés Celsius.

6. Procédé selon l'une quelconque des revendications 3 à 5, dans lequel la phase b3) permet la rigidification d'au moins la surface externe du matériau à base d'élastomère thermoplastique utilisé, en le refroidissant en-dessous d'une température déterminée fonction du matériau à base d'élastomère thermoplastique.

7. Procédé selon la revendication précédente, dans lequel la température déterminée est la température de transition vitreuse ou la température de fusion du matériau à base d'élastomère thermoplastique utilisé.

8. Tambour (13) de conformation comportant deux chariots (14₁, 14₂) déplaçables l'un par rapport à l'autre, chaque chariot comprenant des moyens de liaison par pivotement à deux tringles (4) d'une carcasse (3) d'un bandage pneumatique (1), **caractérisé en ce qu'il** comporte des éléments chauffants (15) pour la mise en oeuvre de la phase a3) du procédé selon les revendications précédentes.

9. Tambour (13) selon la revendication précédente, comprenant un anneau (18) agencé pour exercer, à l'aide de sa surface externe, une contrainte contre la surface interne de la carcasse (3) pour lui donner sa géométrie de conformation, les éléments chauffants (15) comportant au moins une source (19) de rayonnements électromagnétiques agencée pour chauffer la carcasse (3) par sa surface externe.

10. Tambour (13) selon la revendication 8, dans lequel les éléments chauffants (15) comportent un anneau (18) chauffant agencé pour exercer, à l'aide de sa surface externe, une contrainte contre la surface interne de la carcasse (3) pour la chauffer et lui donner sa géométrie de conformation.

11. Tambour (13) selon la revendication 8, dans lequel les éléments chauffants (15) comportent deux moules (17₁, 17₂) chauffants agencés pour, après leur assemblage, recevoir contre leur surface interne, par une mise en pression de la surface interne de la carcasse (3), la surface externe de la carcasse (3) pour la chauffer et lui donner sa géométrie de conformation.

## Patentansprüche

1. Verfahren zur Herstellung eines Luftreifens (1), das die folgenden Schritte umfasst:
a) Bilden einer Karkasse (3) aus mindestens einem ersten Material auf Basis von thermoplastischem Elastomer und zweier Randwülste (4), wobei dieser Schritt eine Phase a2) umfasst, in der die Karkasse (3) aus mindestens dem ersten thermoplastischen Elastomermaterial und die Randwülste (4) flach konfektioniert werden, und eine Phase a3), in der die Karkasse (3) aufgebaut wird, indem die Randwülste (4) angenähert werden, wobei dieses Aufbauen im warmen Zustand ausgeführt wird, um die Beanspruchungen der Karkasse (3) bei ihrem Aufbauen abzubauen;
b) Anformen mindestens eines zweiten Materials auf Basis von thermoplastischem Elastomer an die Karkasse (3) .

2. Verfahren nach dem vorhergehenden Anspruch, bei dem der Schritt a) die folgenden Phasen umfasst:
a1) Herstellen des ersten Materials auf Basis von thermoplastischem Elastomer, einer Karkassenlage (2), zweier Randwülste (4), eines luftundurchlässigen Innengummis (6) und von Scheitelarbeitslagen (8);
a2) flaches Konfektionieren der Karkasse (3) aus dem ersten thermoplastischen Elastomermaterial, der Karkassenlage (2), der beiden Randwülste (4), des luftundurchlässigen Innengummis (6) und der Scheitelarbeitslagen (8);
a3) Aufbauen der Karkasse (3) durch Annähern der Randwülste (4), wobei dieses Aufbauen im warmen Zustand ausgeführt wird, um die Beanspruchungen der Karkasse (3) bei ihrem Aufbauen abzubauen.

3. Verfahren nach Anspruch 1 oder 2, bei dem der Schritt b) die folgenden Phasen umfasst:
b1) Einpassen der Karkasse (3) in eine Form (9);
b2) Einspritzen des zweiten Materials auf Basis von thermoplastischem Elastomer auf die Karkasse (3), um äußere Seitenwände (5) und einen Laufstreifen (7) zu bilden;
b3) Abkühlen, in der Form (9), der beim Schritt b2) erhaltenen Einheit;
b4) Lösen des so gebildeten Luftreifens (1) aus der Form (9) .

4. Verfahren nach dem vorhergehenden Anspruch, bei dem bei der Phase b2) ein zweites Material auf Basis von thermoplastischem Elastomer eingespritzt wird, um die äußeren Seitenwände (5) zu bilden, und ein drittes Material auf Basis von thermoplastischem Elastomer eingespritzt wird, um den Laufstreifen (7) zu bilden, wobei die zweiten und dritten Materialien auf Basis von thermoplastischem Elastomer verschieden sind.

5. Verfahren nach Anspruch 3 oder 4, bei dem beim Schritt b) die Form (9) auf einer Temperatur unter 35 Grad Celsius gehalten wird.

6. Verfahren nach einem der Ansprüche 3 bis 5, bei dem die Phase b3) das Erstarren mindestens der Außenfläche des verwendeten Materials auf Basis von thermoplastischem Elastomer ermöglicht, indem es unter eine bestimmte Temperatur abgekühlt wird, die vom Material auf Basis von thermoplastischem Elastomer abhängig ist.

7. Verfahren nach dem vorhergehenden Anspruch, bei dem die bestimmte Temperatur die Glasübergangstemperatur oder die Schmelztemperatur des verwendeten Materials auf Basis von thermoplastischem Elastomer ist.

8. Aufbautrommel (13), die zwei zueinander verlagerbare Schlitten (14₁, 14₂) umfasst, wobei jeder Schlitten Mittel zum Verbinden einer Karkasse (3) eines Luftreifens (1) mit zwei Randwülsten (4) durch Schwenken aufweist, **dadurch gekennzeichnet, dass** sie Heizelemente (15) zum Durchführen der Phase a3) des Verfahrens nach den vorhergehenden Ansprüchen umfasst.

9. Trommel (13) nach dem vorhergehenden Anspruch, die einen Ring (18) aufweist, der dazu gestaltet ist, mithilfe seiner Außenfläche eine Beanspruchung gegen die Innenfläche der Karkasse (3) auszuüben, um ihr ihre Aufbaugeometrie zu verleihen, wobei die Heizelemente (15) mindestens eine Quelle (19) elektromagnetischer Strahlungen umfassen, die dazu gestaltet ist, die Karkasse (3) über ihre Außenfläche zu erhitzen.

10. Trommel (13) nach Anspruch 8, bei der die Heizelemente (15) einen heizenden Ring (18) umfassen, der dazu gestaltet ist, mithilfe seiner Außenfläche eine Beanspruchung gegen die Innenfläche der Karkasse (3) auszuüben, um sie zu erhitzen und ihr ihre Aufbaugeometrie zu verleihen.

11. Trommel (13) nach Anspruch 8, bei der die Heizelemente (15) zwei heizende Formen (17₁, 17₂) umfassen, die dazu gestaltet sind, nach ihrem Zusammenfügen, an ihrer Innenfläche durch ein Druckbeaufschlagen der Innenfläche der Karkasse (3) die Außenfläche der Karkasse (3) aufzunehmen, um sie zu erhitzen und ihr ihre Aufbaugeometrie zu verleihen.

## Claims

1. Method for manufacturing a pneumatic tyre (1) comprising the following steps:
a) forming a carcass (3) from at least one first thermoplastic elastomer-based material and two bead wires (4), this step comprising a phase a2) in which the carcass (3) is assembled flat from at least the first thermoplastic elastomer material and the bead wires (4), and a phase a3) in which the carcass (3) is formed by bringing the bead wires (4) closer together, this forming being done hot in order to relax the strains of the carcass (3) in the forming thereof;
b) overmoulding on the carcass (3) at least one second thermoplastic elastomer-based material.

2. Method according to the preceding claim, wherein the step a) comprises the following steps:
a1) manufacturing the first thermoplastic elastomer-based material, a carcass ply (2), two bead wires (4), an air-tight inner rubber (6) and working crown plies (8);
a2) assembling the carcass (3) flat from the first thermoplastic elastomer material, the carcass ply (2), the two bead wires (4), the air-tight inner rubber (6) and the working crown plies (8) ;
a3) forming the carcass (3) by bringing the bead wires (4) closer together, this forming being done hot in order to relax the strains of the carcass (3) in the forming thereof.

3. Method according to Claim 1 or 2, wherein the step b) comprises the following phases:
b1) adjusting the carcass (3) in a mould (9);
b2) injecting the second thermoplastic elastomer-based material on the carcass (3) in order to form outer side walls (5) and a tread (7);
b3) cooling, in the mould (9), the assembly obtained in the step b2);
b4) freeing the duly formed pneumatic tyre (1) from the mould (9).

4. Method according to the preceding claim, wherein, in the phase b2), a second thermoplastic elastomer-based material is injected to form the outer side walls (5) and a third thermoplastic elastomer-based material is injected to form the tread (7), the second and third thermoplastic elastomer-based materials being different.

5. Method according to Claim 3 or 4, wherein, in the step b), the mould (9) is maintained at a temperature lower than 35° Celsius.

6. Method according to any one of Claims 3 to 5, wherein the phase b3) allows at least the outer surface of the thermoplastic elastomer-based material used to be stiffened, by cooling it below a determined temperature that is a function of the thermoplastic elastomer-based material.

7. Method according to the preceding claim, wherein the determined temperature is the glass transition temperature or the melting temperature of the thermoplastic elastomer-based material used.

8. Preforming drum (13) comprising two carriages (14₁, 14₂) that can be displaced with respect to one another, each carriage comprising pivoting link means with two bead wires (4) of a carcass (3) of a pneumatic tyre (1), **characterized in that** it comprises heating elements (15) for implementing the phase a3) of the method according to the preceding claims.

9. Drum (13) according to the preceding claim, comprising a ring (18) arranged to exert, using its outer surface, a strain against the inner surface of the carcass (3) to give it its formed geometry, the heating elements (15) comprising at least one source (19) of electromagnetic radiations arranged to heat the carcass (3) by its outer surface.

10. Drum (13) according to Claim 8, wherein the heating elements (15) comprise a heating ring (18) arranged to exert, using its outer surface, a strain against the inner surface of the carcass (3) to heat it and give it its formed geometry.

11. Drum (13) according to Claim 8, wherein the heating elements (15) comprise two heating moulds (17₁, 17₂) arranged to, after their assembly, receive against their inner surface, by a pressurizing of the inner surface of the carcass (3), the outer surface of the carcass (3) to heat it and give it its formed geometry.
